# FASCICULE DE BREVET EUROPEEN

(11) **EP 1 929 250 B1**
(45) Date de publication et mention de la délivrance du brevet: **19.12.2012**
(21) Numéro de dépôt: 06793195.6
(22) Date de dépôt: 04.09.2006
(51) Int. Cl.: G01D 5/48

(54) **STRUCTURE DE CAPTEUR NOTAMMENT POUR UN ENVIRONNEMENT SEVERE DANS UN VEHICULE AUTOMOBILE ET BOUGIE DE PRECHAUFFAGE COMPORTANT UN TEL CAPTEUR**
SENSORSTRUKTUR INSBESONDERE FÜR HARSCHE UMGEBUNGEN IN EINEM KRAFTFAHRZEUG UND EINEN SOLCHEN SENSOR UMFASSENDE GLÜHKERZE
SENSOR STRUCTURE IN PARTICULAR FOR HARSH ENVIRONMENT IN A MOTOR VEHICLE AND PREHEATER PLUG COMPRISING SUCH A SENSOR

(30) Priorité: 08.09.2005 FR 0509173
(43) Date de publication de la demande: 11.06.2008
(73) Titulaire: Peugeot Citroën Automobiles SA, 78140 Vélizy-Villacoublay (FR); Commissariat à l'Énergie Atomique et aux Énergies Alternatives, 75015 Paris (FR)
(72) Inventeur: BAVOUX, Bernard, F-91440 Bures Sur Yvette (FR); DANEL, Jean-Sébastien, F-38130 Echirolles (FR); ROBERT, Philippe, F-38100 Grenoble (FR); PAULY, Maxime, F-57310 Bertrange (FR)
(74) Mandataire: Ménès, Catherine
(86) Numéro de dépôt international: PCT/EP2006/065977
(87) Numéro de publication internationale: WO 2007/028782

(56) Documents cités:
- WO-A-97/09567
- DE-A1- 19 903 049
- US-A- 5 597 534
- US-B1- 6 579 498

## Description

La présente invention concerne une structure de capteur pour un environnement sévère dans un véhicule automobile et une bougie de préchauffage comportant une telle structure.

Un problème principal rencontré dans ce type d'applications est de pouvoir mettre en oeuvre des mesures dans un environnement sévère, pour lesquelles les technologies classiques de capteurs ne sont pas utilisables en raison des conditions d'environnement sévères rencontrées, que celles-ci soient des conditions d'environnement thermiques, vibratoires, chimiques, etc.

Une approche utilisée jusqu'à présent pour réaliser une telle mesure dans un tel environnement difficile est de mettre en place un transducteur entre la grandeur à mesurer et le dispositif de mesure, de telle façon qu'à l'extrémité du transducteur, les conditions d'environnement soient compatibles avec la technologie du capteur.

Le transducteur a ainsi pour rôle de former un écran pour certaines composantes physiques gênantes ou incompatibles avec le capteur, tout en étant un transmetteur de la grandeur à mesurer.

Mais l'utilisation de ce transducteur présente un certain nombre d'inconvénients, notamment en raison de déformations, de perte ou d'ajout d'informations que celui-ci peut engendrer, etc..

Ces altérations se caractérisent par exemple par des imperfections en amplitude (manque de précision ou saturation) et/ou dans le domaine dynamique (bande passante limitée en basse et/ou en haute fréquence).

Un exemple d'une telle mesure en environnement sévère concerne la mesure de la pression cylindre dans un moteur thermique de véhicule automobile.

La mesure d'une telle pression cylindre dans un moteur est un besoin nouveau. Il s'agit alors de mesurer durant les différents cycles du moteur (admission, compression, combustion, échappement), la variation de pression des gaz afin d'optimiser le pilotage de l'injection et l'allumage pour obtenir un meilleur rendement et ainsi diminuer la pollution.

Mais, durant les cycles moteur, la température varie de la température ambiante lorsque le moteur est à l'arrêt, à plusieurs centaines de degrés C, sachant que la flamme dans le cylindre est à environ 1800°C. Or, un certain nombre de matériaux utilisés pour les capteurs ne résistent pas à de telles températures. C'est par exemple le cas des matériaux tels que le silicium, qui sont habituellement utilisés pour de telles mesures de pression.

On a alors proposé d'inclure le capteur de pression cylindre dans une bougie de préchauffage, par exemple pour les moteurs Diesel. La pointe de la bougie se trouve alors dans le haut du cylindre au contact de la flamme. Elle est utilisée comme transducteur pour compresser à l'autre extrémité de la bougie, un capteur qui se trouve dans un environnement tempéré au contact de la culasse du moteur refroidie par circulation d'eau par exemple.

Mais la transduction effectuée par la pointe de la bougie de préchauffage est soumise à une inertie mécanique (masse du transducteur) et, selon les dispositifs utilisés, pose des problèmes d'étanchéité, de même que des problèmes de précision dans les faibles valeurs de pression et/ou est sensible aux vibrations. Les documents US6579498, DE 19903049, US55975534, WO 97/09567 décrivent l'état de l'art de ces capteurs.

Une variante de réalisation de ce montage consiste également à inclure le capteur de pression cylindre dans la bougie de préchauffage, mais diffère de la solution précédente en ce que le dispositif de fixation donne appui au transducteur de pression de part et d'autre de l'épaisseur de la culasse. On mesure alors une déformée de la culasse sous l'effet de la pression.

Mais cette mesure dépend du couple de serrage de la bougie de préchauffage dans la culasse. De plus, elle capte les modes de vibration de la culasse qui se superposent au signal utile. Enfin, le signal mesuré est affecté par la fonction de transfert qui dépend de la culasse et de son environnement.

Une autre solution consiste à utiliser une ou plusieurs fibres optiques pour capter la réflexion d'un rayon lumineux par une membrane soumise à la pression et à la température.

La fibre optique transporte alors cette information en un lieu tempéré où se trouve une électronique d'acquisition et de traitement du signal.

Cependant, la fibre optique a également des limites de tenue en température. La membrane sur laquelle se réfléchit le rayon lumineux détermine la qualité de la mesure. Sa définition doit tenir compte des caractéristiques mécaniques (mode propre de vibration), et thermiques (dilatation déformant la membrane), des problèmes de vieillissement mécanique de la membrane, des problèmes d'oxydation sur sa face réfléchissante, etc.

On assiste par ailleurs à l'émergence de technologies de télécommunication permettant de communiquer des données et/ou de téléalimenter des dispositifs électroniques associés.

Ainsi par exemple, de tels moyens sont utilisés pour la mesure de pression d'un pneumatique.

Il est en effet difficile de faire cheminer des liaisons électriques dans une pièce tournante. Un capteur de pression lié au pneumatique éprouve alors des difficultés à communiquer avec le véhicule en raison de ses déplacements par rapport à celui-ci.

Une solution consiste à inclure un capteur autoalimenté à l'intérieur du pneumatique et un émetteur/récepteur dans le véhicule. Le capteur peut alors communiquer par une liaison radiofréquence avec l'émetteur/récepteur. Dans certains dispositifs, le capteur peut également être téléalimenté par induction ou par radiofréquence.

Une telle structure peut également être utilisée pour assurer une mesure de température dans un four.

En effet, il est difficile de faire cheminer des liaisons électriques dans un environnement trop chaud, les connexions mettant en oeuvre par exemple des brasures, étant sensibles à ce type d'environnement, dans la mesure où par exemple de telles brasures peuvent fondre.

On utilise également dans le domaine de l'industrie automobile, des moyens de communication radiofréquence pour les antivols de véhicules.

Ainsi par exemple, un dispositif d'identification peut être intégré dans une clé de véhicule automobile, ce dispositif ne nécessitant pas d'alimentation pour réduire la maintenance au minimum.

On peut alors inclure dans la clé, un dispositif qui en réponse à un signal radiofréquence, renvoie un signal porteur d'une information spécifique selon la clé. Ce dispositif est alors alimenté grâce à l'énergie du signal électromagnétique reçu.

D'autres exemples utilisant des moyens de communication radiofréquence pour une identification radiofréquence de type RFID, mettent en oeuvre des puces passives ou actives combinant captation d'énergie, processeur, mémoire et communication radiofréquence et se développent à grande échelle pour les identifications.

Le but de l'invention est de proposer une structure de capteur bien adaptée à une utilisation dans un environnement sévère de véhicule automobile.

A cet effet l'invention a pour objet une structure de capteur pour un environnement sévère dans un véhicule automobile, caractérisée en ce qu'elle comprend un corps de capteur comportant à une extrémité, un élément sensible à la grandeur à mesurer dans l'environnement sévère et à une autre extrémité, un circuit de raccordement de celui-ci, placé hors de l'environnement sévère, séparés physiquement l'un de l'autre, raccordés par des moyens de transmission d'informations par courant porteur sur un conducteur électrique du capteur auquel l'élément sensible et le circuit de raccordement sont associés par des moyens de couplage sans fil et entre lesquels sont prévus des moyens de protection du circuit de raccordement à l'encontre de l'environnement.

Suivant d'autres caractéristiques de l'invention
- les moyens de transmission d'informations comportent en outre des moyens d'alimentation à distance de l'élément sensible intégrés dans le circuit de raccordement ;
- l'élément sensible comporte un circuit oscillant dont au moins un composant est sensible à la grandeur à mesurer ;
- le circuit oscillant comporte en outre une bobine formant inductance du circuit oscillant et moyens de couplage de l'élément sensible au conducteur électrique ;
- le conducteur est associé à toute autre fonction localisée dans le
   corps de capteur comme par exemple un bobinage pour une fonction de préchauffage dans une bougie de préchauffage;
- elle comporte des moyens de couplage magnétique du bobinage du conducteur et de la bobine de l'élément sensible ;
- le bobinage et la bobine sont disposés perpendiculairement l'un par rapport à l'autre;
- le bobinage et la bobine sont disposés coaxialement;
- l'élément sensible est un élément sensible à la pression;
- l'élément sensible est un élément sensible à la température;
- l'élément sensible est un élément sensible au gaz ;
- l'élément sensible est un élément sensible aux vibrations, accélérations ou chocs ;
- l'élément sensible est un élément sensible à deux ou plusieurs grandeurs parmi température, pression, gaz, vibration, accélération ou choc, etc. ;
- le composant du circuit oscillant sensible à la grandeur est un condensateur en série avec la bobine de celui-ci ; et
- la bobine est une bobine spirale et le bobinage un bobinage hélicoïdal.

L'invention a également pour objet une bougie de préchauffage pour moteur Diesel de véhicule automobile, caractérisée en ce qu'elle comporte une structure de capteur telle que décrite précédemment.

L'invention sera mieux comprise à la lecture de la description qui va suivre, donnée uniquement à titre d'exemple et faite en se référant aux dessins annexés, sur lesquels :
- la Fig. 1 représente un schéma synoptique illustrant la structure générale et le fonctionnement d'une structure de capteur selon l'invention;
- la Fig. 2 représente une vue en coupe schématique d'un premier exemple de réalisation d'une bougie de préchauffage comportant une structure de capteur selon l'invention;
- la Fig. 3 représente un exemple de réalisation d'un élément sensible entrant dans la constitution d'une structure de capteur selon l'invention ; et
- les Fig. 4, 5, 6 et 7 représentent des variantes de réalisation d'une bougie de préchauffage et d'une structure de capteur selon l'invention.

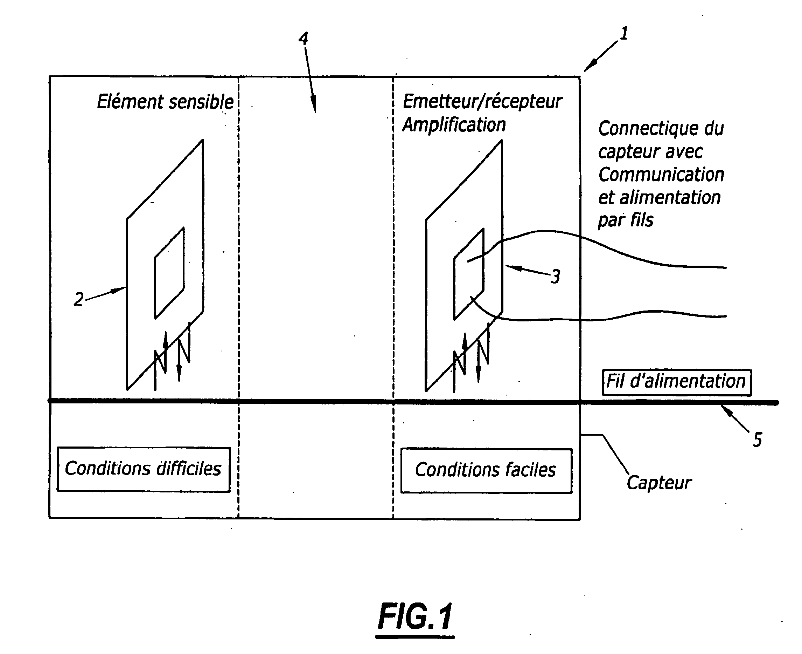

On a en effet illustré sur la figure 1, une structure de capteur notamment pour environnement sévère dans un véhicule automobile.

On sait que de façon schématique, cette structure de capteur comporte un corps de capteur désigné par la référence générale 1 sur cette figure, comportant à une extrémité, un élément sensible à la grandeur à mesurer, cet élément sensible étant désigné par la référence générale 2.

Cet élément sensible est alors placé dans l'environnement sévère.

A l'autre extrémité, ce corps de capteur comporte un circuit de raccordement désigné par la référence générale 3, placé hors de l'environnement sévère et séparé physiquement de l'élément sensible. Par contre, ce circuit 3 est raccordé à l'élément sensible 2, par des moyens de transmission d'informations par courant porteur sur un conducteur électrique du capteur auquel l'élément sensible et le circuit de raccordement sont associés par des moyens de couplage sans fil.

En effet, ce circuit peut par exemple comporter un émetteur/récepteur d'informations voire des moyens d'amplification, permettant de récupérer un signal de l'élément sensible, voire d'alimenter celui-ci, à travers un conducteur du capteur.

Dans ce cas, les moyens d'émission/réception d'informations, voire de téléalimentation c'est-à-dire de réception d'alimentation à distance, sont intégrés dans l'élément sensible 2 par exemple sous la forme d'une puce monobloc sans connexion avec un conducteur électrique.

Entre ce circuit de raccordement 3 et l'élément sensible 2 sont disposés des moyens désignés par la référence générale 4, destinés à assurer la protection du circuit de raccordement à l'encontre de l'environnement sévère.

Ainsi par exemple, des moyens d'isolation thermique peuvent être envisagés entre l'élément sensible 2 et le circuit 3, c'est-à-dire entre les deux extrémités du corps de capteur 1, pour assurer la protection du circuit 3.

Le conducteur électrique est quant à lui désigné par la référence générale 5 et s'étend donc dans le capteur entre ses extrémités.

Un environnement sévère est en fait un environnement dans lequel on cumule en plus de la grandeur à mesurer, une autre grandeur non compatible avec un système électronique de mesure comportant au moins un composant électronique avec des connexions.

Dans un tel environnement, l'électronique et ses connexions constituent habituellement un point faible. Une connexion est en fait un fil ou une nappe faisant contact entre deux pièces.

Une couche de métallisation d'un circuit imprimé n'est pas considérée comme une connexion. Une couche de métallisation d'un circuit intégré (par exemple une puce en micro ou nano technologie) n'est pas considérée non plus comme une connexion

Dans la structure de capteur selon l'invention, on supprime la notion de transducteur, c'est-à-dire d'élément servant à transmettre l'information visée, comme par exemple la pression, jusqu'à un capteur placé dans une zone moins sévère, ce transducteur assurant la mesure comme cela a été expliqué précédemment.

Au contraire, on place l'élément sensible le plus en contact possible avec la grandeur physique à mesurer dans la mesure où le circuit de raccordement peut quant à lui être protégé de l'environnement.

Ainsi, dans l'exemple décrit en regard de la figure 1, le circuit qui sert au raccordement du capteur vers l'extérieur, comporte également des moyens d'émission/réception d'informations par courrant porteur sur le conducteur 5, permettant de récupérer à partir de l'élément sensible, la valeur de la grandeur à mesurer.

Des moyens d'alimentation de cet élément sensible peuvent également être envisagés de façon classique.

Comme cela a été indiqué précédemment, cet élément sensible peut être un élément sensible à une pression ou à une température.

On peut alors supprimer les connexions entre l'élément sensible du capteur et son circuit de raccordement et remplacer ces connexions par un dispositif de télécommunication par courants porteurs et éventuellement de téléalimentation au sein même du capteur. Une téléalimentation permet alors à l'élément sensible de recevoir l'énergie nécessaire à son fonctionnement.

L'utilisation de moyens de protection du circuit permet alors de protéger ce circuit et de le placer dans un environnement sécurisé.

On notera que ces moyens de protection peuvent par exemple être constitués par une couche d'air ou autre.

Les moyens de télécommunication utilisés peuvent par exemple être analogues à ceux déjà utilisés dans les technologies des étiquettes électroniques ou systèmes RFID, dans lesquelles l'étiquette placée sur un objet émet un signal d'identification de cet objet.

Dans le cas de la structure d'un capteur selon l'invention, le signal est de plus porteur d'une mesure de la grandeur.

L'élément sensible 2, par exemple une puce à base de micro ou nano technologie constitue un élément de matière d'un seul bloc qui peut être mis en oeuvre sans connexion.

On conçoit alors que grâce à une telle structure, on puisse résoudre les problèmes liés à la température de fusion de brasures de composants, de même que les températures de tenue des liaisons entre les puces électroniques et les pattes de raccordement de celles-ci.

Par ailleurs, cette structure permet également de résoudre les problèmes liés aux vibrations, aux chocs et aux mouvements des connexions, à la tenue en température des dispositifs électroniques de mesure, de traitement, d'amplification et d'alimentation et des moyens d'étanchéité entre l'environnement sévère et la partie protégée où doit être acheminée l'information.

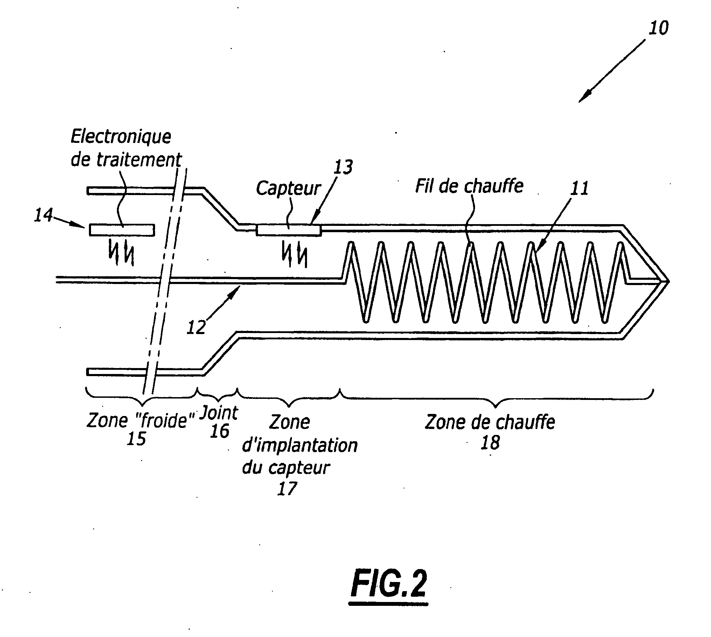

On a illustré sur la figure 2, un premier exemple de réalisation d'une bougie de préchauffage notamment pour moteur Diesel de véhicule automobile, comportant une telle structure de capteur.

On sait en effet que dans le domaine automobile, et plus particulièrement pour les moteurs Diesel, la mesure des paramètres de combustion comme la pression et la température, apparaît de plus en plus nécessaire pour optimiser le fonctionnement des moteurs afin de réduire la consommation et la pollution.

Mais l'environnement de la chambre de combustion est très agressif avec une température de l'ordre de 1000 °C et une pression pouvant aller jusqu'à 200 bars.

Sur cette figure 2 on a illustré une bougie de préchauffage pour moteur Diesel de véhicule automobile, qui est désignée par la référence générale 10 sur cette figure et comporte un fil de chauffe désigné par la référence générale 11, raccordé par un conducteur électrique à des moyens d'alimentation (non représentés), le conducteur électrique étant désigné par la référence générale 12.

L'élément sensible est désigné par la référence générale 13 et le circuit de raccordement est désigné par la référence générale 14.

Ainsi l'élément sensible placé sur le crayon de la bougie est en contact direct avec les paramètres à mesurer de la chambre de combustion, tels que par exemple la température, la pression ou autre.

Cet élément sensible est donc placé dans des conditions sévères.

Le circuit de raccordement avec la partie électronique de traitement, peut être implanté à l'intérieur de la bougie à l'extrémité correspondante de celle-ci, c'est-à-dire dans une zone refroidie par la culasse du moteur. Ainsi, la bougie peut être définie en quatre zones distinctes à savoir une zone froide désignée par la référence générale 15, une zone de joint désignée par la référence générale 16, une zone d'implantation de l'élément sensible désignée par la référence générale 17 et une zone de chauffe désignée par la référence générale 18.

Il va de soi bien entendu, comme cela sera décrit plus en détail par la suite, que d'autres modes de réalisation encore peuvent être envisagés.

L'élément sensible communique alors avec l'électronique de traitement à travers une modulation sur le conducteur d'alimentation du fil de chauffe de la bougie de préchauffage.

Une telle structure présente l'avantage de réduire la connectique tout en déportant l'électronique de traitement dans une zone où la température est plus basse, la pression plus faible, etc.

Une telle communication peut être effectuée par exemple à l'aide d'un signal ne perturbant pas le fonctionnement de la bougie et servant également à alimenter le capteur, ce signal étant transmis par le conducteur 12.

De manière avantageuse, le dispositif de communication de l'élément sensible est réalisé sur une seule puce, sans connexion, de manière à le rendre plus endurant aux conditions de température et de pression.

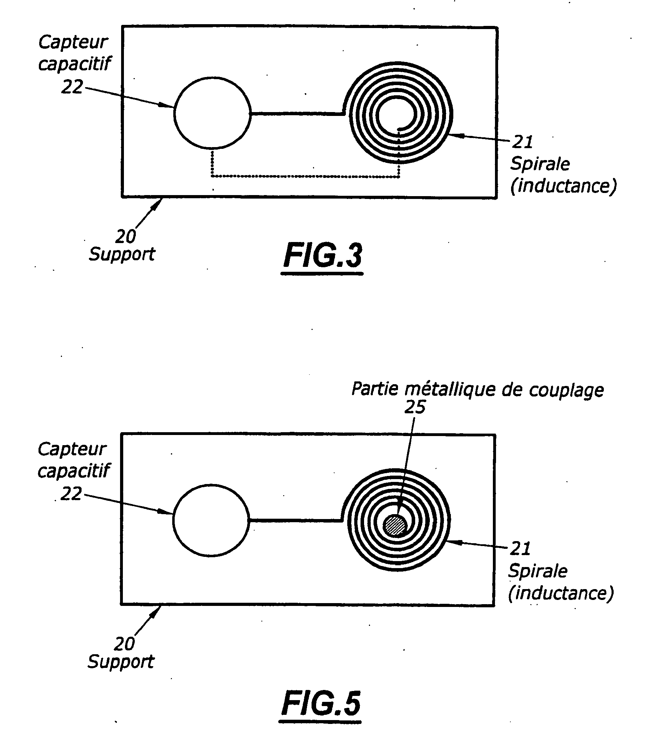

Un mode de réalisation de ces moyens est illustré sur la figure 3.

L'élément sensible comporte alors un support désigné par la référence générale 20 sur lequel sont prévus en série une bobine spirale formant inductance désignée par la référence générale 21, en série avec un capteur capacitif de pression désigné par la référence générale 22.

La partie sensible du capteur est alors un capteur de pression capacitif relié à une bobine micro usinée par exemple en forme dé spirale. L'association de ces deux éléments en série constitue un réseau oscillant à une fréquence dépendant de la capacité et donc de la pression.

La bobine utilisée permet de réaliser à la fois une inductance pour le circuit oscillant et un système de couplage avec le conducteur 12 du fil de chauffe.

Tous ces éléments sont réalisés sur une seule puce par des techniques de micro électronique classiques sans recours à des moyens de connexion.

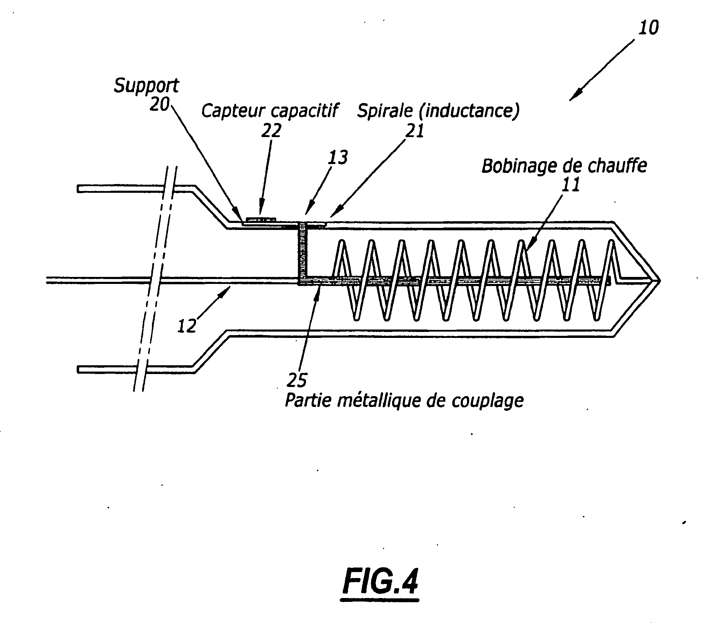

Sur les figures 4 et 5, on a illustré une variante de réalisation dans laquelle on utilise des moyens de couplage magnétique entre le fil de chauffe de la bougie qui se présente sous la forme d'un bobinage hélicoïdal et l'inductance de l'élément sensible qui se présente sous la forme d'une bobine en spirale.

Sur ces figures 4 et 5, des numéros de références identiques ont été utilisés pour désigner des pièces analogues ou identiques à celles décrites en regard des figures précédentes.

C'est ainsi que l'on reconnaît sur ces figures 4 et 5, la bougie de préchauffage 10, le bobinage de chauffe 11, le conducteur d'alimentation 12, le capteur 13 avec son support 20, son inductance en spirale 21 et son capteur capacitif 22.

Sur ces figures, on utilise avantageusement pour coupler magnétiquement la bobine d'inductance de l'élément sensible du capteur et le bobinage hélicoïdal de chauffe de la bougie, une pièce métallique désignée par la référence générale 25 et qui traverse les deux bobines.

Cette pièce métallique 25 permet alors de canaliser le flux du champ magnétique de manière plus efficace que l'air pour améliorer le couplage magnétique entre les deux bobinages.

Dans l'exemple de réalisation décrit, les deux bobinages, c'est-à-dire le bobinage de chauffe et la bobine en spirale, sont disposés perpendiculairement l'un par rapport à l'autre et la pièce 25 présente une portion coudée.

L'une des extrémités de cette pièce 25 s'étend alors à travers le bobinage de chauffe 11 tandis que l'autre extrémité de celle-ci s'étend au centre de la bobine en spirale 21.

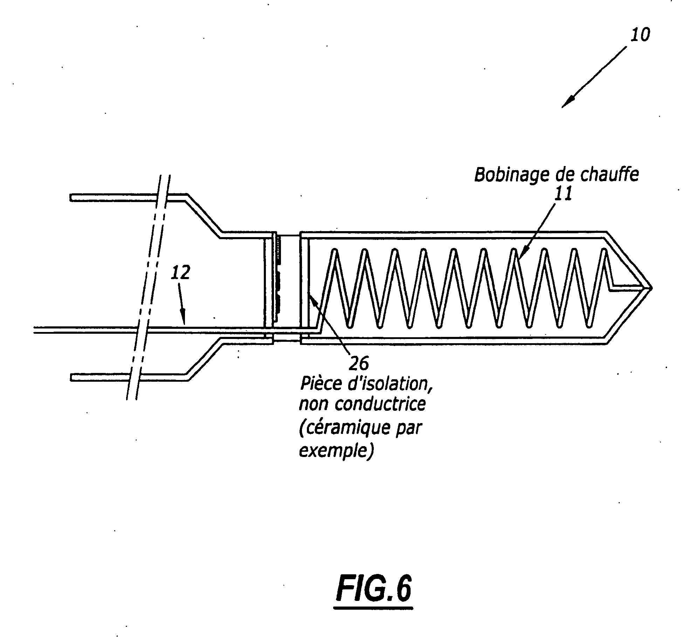

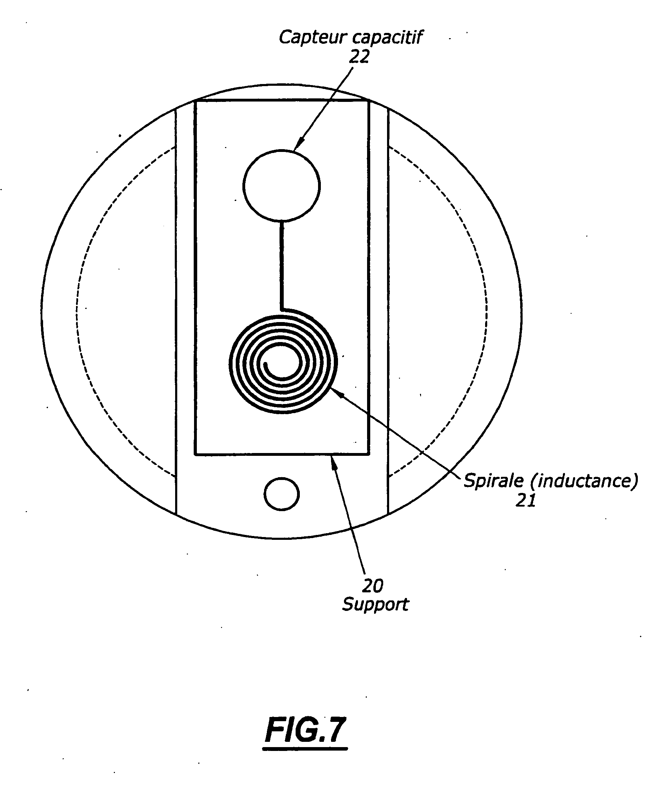

Bien entendu, d'autres modes de réalisation encore peuvent être envisagés comme par exemple celui illustré sur les figures 6 et 7.

Sur ces figures, des numéros de référence identiques désignent des pièces identiques ou analogues à celles déjà décrites en regard des figures précédentes.

C'est ainsi par exemple que l'on reconnaît sur ces figures, la bougie de préchauffage 10, le bobinage de chauffe 11, le conducteur 12, le support de l'élément sensible 20 avec son inductance en spirale 21 et son capteur capacitif 22.

Dans l'exemple décrit, la bobine en spirale de l'élément sensible et le bobinage de chauffe de la bougie sont disposés coaxialement.

L'élément sensible est alors disposé transversalement par rapport à l'axe de la bougie de manière que les bobines d'inductance en spirale et de chauffe hélicoïdale sont coaxiales ou, en tout état de cause, présentent des axes parallèles.

De cette manière, le couplage magnétique entre ces deux éléments est fortement augmenté.

Cependant, il est nécessaire de réaliser une isolation entre l'intérieur de la bougie et les gaz de la chambre de combustion par des pièces non conductrices comme par exemple en céramique, perméables aux ondes électromagnétiques.

Ces pièces sont par exemple désignées par la référence générale 26 sur ces figures.

Il va de soi bien entendu que d'autres modes de réalisation encore peuvent être envisagés.

Ainsi par exemple, il est possible de regrouper plusieurs capteurs sur un même élément sensible comme par exemple un capteur de pression, un capteur de température, etc.

Ceci permet alors de réduire le coût en utilisant un dispositif de télécommunication et/ou de téléalimentation mutualisé.

Ceci permet également par exemple de corriger certaines dérives de l'élément sensible. C'est par exemple le cas pour une combinaison de capteurs de pression et de température, par une correction de la dérive en température.

On peut aussi envisager l'utilisation ou la combinaison avec un capteur sensible à un gaz, pour permettre par exemple la mesure de la richesse en oxygène à l'intérieur de la chambre de combustion.

On peut encore envisager l'utilisation ou la combinaison avec un capteur sensible à une vibration, accélération ou choc, pour permettre par exemple de surveiller le déroulement de la combustion.

Un élément sensible à deux ou plusieurs grandeurs parmi température, pression, gaz, vibration, accélération ou choc, peut également être envisagé.

Bien entendu, différents types de dispositifs de télécommunications radiofréquences peuvent être envisagés.

## Revendications

1. Structure de capteur pour un environnement sévère, **caractérisée en ce qu'**elle comprend un corps de capteur (1) comportant à une extrémité, un élément (2) sensible à la grandeur à mesurer dans l'environnement sévère et à une autre extrémité, un circuit (3) de raccordement de celui-ci, placé hors de l'environnement sévère, séparés physiquement l'un de l'autre, raccordés par des moyens de transmission d'informations par courant porteur sur un conducteur électrique (5) du capteur auquel l'élément sensible et le circuit de raccordement sont associés par des moyens de couplage sans fil et entre lesquels sont prévus des moyens (4) de protection du circuit de raccordement à l'encontre de l'environnement.

2. Structure selon la revendication 1, **caractérisée en ce que** les moyens de transmission d'informations comportent en outre des moyens d'alimentation à distance de l'élément sensible (2) intégrés dans le circuit de raccordement (3).

3. Structure selon la revendication 1 ou 2, **caractérisée en ce que** l'élément sensible comporte un circuit oscillant (21, 22) dont au moins un composant (22) est sensible à la grandeur à mesurer.

4. Structure selon la revendication 3, **caractérisée en ce que** le circuit oscillant comporte en outre une bobine (21) formant inductance du circuit oscillant et moyens de couplage de l'élément sensible (2) au conducteur électrique (5).

5. Structure selon la revendication 4, **caractérisée en ce que** le conducteur (5) est associé à un bobinage (11).

6. Structure selon la revendication 5, **caractérisée en ce qu'**elle comporte des moyens (25) de couplage magnétique du bobinage (11) du conducteur (5) et de la bobine (21) de l'élément sensible (2).

7. Structure selon la revendication 5 ou 6, **caractérisée en ce que** le bobinage (11) et la bobine (21) sont disposés perpendiculairement l'un par rapport à l'autre.

8. Structure selon la revendication 5 ou 6, **caractérisée en ce que** le bobinage (11) et la bobine (21) sont disposés coaxialement.

9. Structure selon l'une quelconque des revendications précédentes, **caractérisée en ce que** l'élément sensible (2) est un élément sensible à la pression.

10. Structure selon l'une quelconque des revendications précédentes, **caractérisée en ce que** l'élément sensible (2) est un élément sensible à la température.

11. Structure selon l'une quelconque des revendications précédentes, **caractérisée en ce que** l'élément sensible (2) est un élément sensible au gaz.

12. Structure selon l'une quelconque des revendications précédentes, **caractérisée en ce que** l'élément sensible (2) est un élément sensible aux vibrations, accélérations ou chocs.

13. Structure selon l'une quelconque des revendications précédentes, **caractérisée en ce que** l'élément sensible (2) est un élément sensible à deux ou plusieurs grandeurs parmi température, pression, gaz, vibration, accélération ou choc, etc.

14. Structure selon la revendication 3 et l'une quelconque des revendications 4 à 13, **caractérisée en ce que** le composant du circuit oscillant sensible à la grandeur est un condensateur (22) en série avec la bobine (21) de celui-ci.

15. Structure selon la revendication 5 et l'une quelconque des revendications 6 à 14, **caractérisée en ce que** la bobine (21) est une bobine spirale et le bobinage (11) un bobinage hélicoïdal.

16. Structure selon l'une quelconque des revendications précédentes, **caractérisée en ce que** l'environnement sévère est situé dans un véhicule automobile.

17. Bougie de préchauffage pour moteur Diesel de véhicule automobile, **caractérisée en ce qu'**elle comporte une structure de capteur selon l'une quelconque des revendications précédentes.

## Claims

1. A sensor structure for a harsh environment, **characterized in that** it comprises a sensor body (1) comprising at one end an element (2) sensitive to the quantity to be measured in the harsh environment and at another end a connection circuit (3) for the latter, placed away from the harsh environment, physically separated from one another, connected by means for transmitting information by carrier current on an electrical conductor (5) of the sensor with which the sensitive element and the connection circuit are associated by wireless coupling means and between which are provided means (4) for protecting the connection circuit from the environment.

2. The structure as claimed in claim 1, **characterized in that** the means for transmitting information furthermore comprise remote power supply means of the sensitive element (2) that are integrated into the connection circuit (3).

3. The structure as claimed in claim 1 or 2, **characterized in that** the sensitive element comprises an oscillating circuit (21, 22), at least one component (22) of which is sensitive to the quantity to be measured.

4. The structure as claimed in claim 3, **characterized in that** the oscillating circuit furthermore comprises a coil (21) forming inductance of the oscillating circuit and means for coupling the sensitive element (2) to the electrical conductor (5).

5. The structure as claimed in claim 4, **characterized in that** the conductor (5) is associated with a winding (11).

6. The structure as claimed in claim 5, **characterized in that** it comprises means (25) of magnetic coupling of the winding (11) of the conductor (5) and of the coil (21) of the sensitive element (2).

7. The structure as claimed in claim 5 or 6, **characterized in that** the winding (11) and the coil (21) are disposed perpendicularly one with respect to the other.

8. The structure as claimed in claim 5 or 6, **characterized in that** the winding (11) and the coil (21) are disposed coaxially.

9. The structure as claimed in any one of the preceding claims, **characterized in that** the sensitive element (2) is an element sensitive to pressure.

10. The structure as claimed in any one of the preceding claims, **characterized in that** the sensitive element (2) is an element sensitive to temperature.

11. The structure as claimed in any one of the preceding claims, **characterized in that** the sensitive element (2) is an element sensitive to gas.

12. The structure as claimed in any one of the preceding claims, **characterized in that** the sensitive element (2) is an element sensitive to vibrations, accelerations or impacts.

13. The structure as claimed in any one of the preceding claims, **characterized in that** the sensitive element (2) is an element sensitive to two or more quantities out of temperature, pressure, gas, vibration, acceleration or impact, etc.

14. The structure as claimed in claim 3 and any one of Claims 4 to 13, **characterized in that** the component of the oscillating circuit sensitive to the quantity is a capacitor (22) in series with the latter's coil (21).

15. The structure as claimed in claim 5 and any one of Claims 6 to 14, **characterized in that** the coil (21) is a spiral coil and the winding (11) a helical winding.

16. The structure as claimed in any one of the preceding claims, **characterized in that** the harsh environment is located in a motor vehicle.

17. A preheater sparkplug for a motor vehicle diesel engine, **characterized in that** it comprises a sensor structure as claimed in any one of the preceding claims.

## Patentansprüche

1. Sensorstruktur für eine harsche Umgebung, **dadurch gekennzeichnet, dass** sie einen Sensorkörper (1) umfasst, der an einem Ende ein für die in der harschen Umgebung zu messende Größe empfindliches Element (2) und an einem physisch davon getrennten anderen Ende eine außerhalb der harschen Umgebung befindliche Anschlussschaltung (3) dafür aufweist, angeschlossen durch Mittel zum Übertragen von Informationen durch Trägerstrom auf einer Drahtleitung (5) des Sensors, mit dem das empfindliche Element und die Anschlussschaltung über drahtlose Verbindungsmittel verbunden sind und zwischen denen Mittel (4) zum Schützen der Anschlussschaltung vor der Umgebung vorgesehen sind.

2. Struktur nach Anspruch 1, **dadurch gekennzeichnet, dass** die Informationsübertragungsmittel darüber hinaus in die Anschlussschaltung (3) integrierte Mittel zum Fernversorgen des empfindlichen Elements (2) umfassen.

3. Struktur nach Anspruch 1 oder 2, **dadurch gekennzeichnet, dass** das empfindliche Element einen Schwingkreis (21, 22) umfasst, von dem wenigstens eine Komponente (22) für die zu messende Größe empfindlich ist.

4. Struktur nach Anspruch 3, **dadurch gekennzeichnet, dass** der Schwingkreis darüber hinaus eine die Induktanz des Schwingkreises bildende Spule (21) und Mittel zum Verbinden des empfindlichen Elements (2) mit der Drahtleitung (5) umfasst.

5. Struktur nach Anspruch 4, **dadurch gekennzeichnet, dass** die Leitung (5) mit einer Wicklung (11) verbunden ist.

6. Struktur nach Anspruch 5, **dadurch gekennzeichnet, dass** sie Mittel (25) zum magnetischen Verbinden der Wicklung (11) der Leitung (5) mit der Spule (21) des empfindlichen Elements (2) umfasst.

7. Struktur nach Anspruch 5 oder 6, **dadurch gekennzeichnet, dass** die Wicklung (11) und die Spule (21) lotrecht zueinander angeordnet sind.

8. Struktur nach Anspruch 5 oder 6, **dadurch gekennzeichnet, dass** die Wicklung (11) und die Spule (21) koaxial angeordnet sind.

9. Struktur nach einem der vorherigen Ansprüche, **dadurch gekennzeichnet, dass** das empfindliche Element (2) ein druckempfindliches Element ist.

10. Struktur nach einem der vorherigen Ansprüche, **dadurch gekennzeichnet, dass** das empfindliche Element (2) ein temperaturempfindliches Element ist.

11. Struktur nach einem der vorherigen Ansprüche, **dadurch gekennzeichnet, dass** das empfindliche Element (2) ein gasempfindliches Element ist.

12. Struktur nach einem der vorherigen Ansprüche, **dadurch gekennzeichnet, dass** das empfindliche Element (2) ein für Vibrationen, Beschleunigungen oder Stöße empfindliches Element ist.

13. Struktur nach einem der vorherigen Ansprüche, **dadurch gekennzeichnet, dass** das empfindliche Element (2) ein für zwei oder mehr Größen aus Temperatur, Druck, Gas, Vibration, Beschleunigung oder Stoß usw. empfindliches Element ist.

14. Struktur nach Anspruch 3 und einem der Ansprüche 4 bis 13, **dadurch gekennzeichnet, dass** die Komponente des für die Größe empfindlichen Schwingkreises ein Kondensator (22) in Serie mit der Spule (21) desselben ist.

15. Struktur nach Anspruch 5 und einem der Ansprüche 6 bis 14, **dadurch gekennzeichnet, dass** die Spule (21) eine spiralförmige Spule ist und die Wicklung (11) eine schraubenförmige Wicklung ist.

16. Struktur nach einem der vorherigen Ansprüche, **dadurch gekennzeichnet, dass** die harsche Umgebung sich in einem Kraftfahrzeug befindet.

17. Glühkerze für den Dieselmotor eines Kraftfahrzeugs, **dadurch gekennzeichnet, dass** sie eine Sensorstruktur nach einem der vorherigen Ansprüche umfasst.
